# EUROPÄISCHE PATENTSCHRIFT

(11) **EP 0 595 154 B1**
(45) Veröffentlichungstag und Bekanntmachung des Hinweises auf die Patenterteilung: **23.04.1997**
(21) Anmeldenummer: 93116806.6
(22) Anmeldetag: 18.10.1993
(51) Int. Cl.: G05B 19/414, G05B 19/4155

(54) **Verfahren zur Steuerung einer Werkzeugmaschine oder eines Roboters**
Method for the control of a machine tool or a robot
Méthode pour la commande d'une machine-outil ou d'un robot

(30) Priorität: 29.10.1992 DE 4236627
(43) Veröffentlichungstag der Anmeldung: 04.05.1994
(73) Patentinhaber: SIEMENS AKTIENGESELLSCHAFT, 80333 München (DE)
(72) Erfinder: Kutschenreiter, Heiko, Dipl.-Ing., D-91074 Herzogenaurach (DE)

(56) Entgegenhaltungen:
- EP-A- 0 105 158
- EP-A- 0 178 328
- EP-A- 0 188 621
- EP-A- 0 414 911
- WO-A-92/09018

## Beschreibung

Die Erfindung bezieht sich auf ein Verfahren zur Steuerung einer Werkzeugmaschine oder eines Roboters unter Verwendung einer numerischen Steuerung und einer Anpaßsteuerung, wobei der numerischen Steuerung in einem jeweiligen Anwenderprogramm satzweise unter anderem Verfahrsätze eingegeben werden, die zusätzliche Hilfsfunktionen zum Auslösen von Sonderfunktionen beinhalten, die beim von der numerischen Steuerung detektierten Erreichen vorgebbarer Istwerte, z.B. Ist-Ort, Ist-Geschwindigkeit oder Ist-Zeit, der durch die Steuerung bewirkten Bewegung der Werkzeugmaschine oder des Roboters sodann über die Anpaßsteuerung gestartet werden.

Bei numerischen Steuerungen werden die für den Betrieb der angeschlossenen Maschine notwendigen Befehle satzweise in einem Anwenderprogramm vorgegeben. Dabei ist es üblich, Hilfsfunktionen zu programmieren, die als Funktionen M, S oder T entweder direkt vor der jeweils dem Verfahrsatz zugeordneten Bewegung ausgelöst werden oder die undefiniert während der Verfahrbewegung stattfinden. Bearbeitet werden die Hilfsfunktionen M, S und T üblicherweise von der jeweils zugeordneten Anpaßsteuerung.

Ein Verfahren der eingangs genannten Art ist aus der WO-A-92/09018 bekannt, wobei jedoch das Starten von Hilfsfunktionen vom Anwender nicht ohne weiteres in ein normales Teile-programm eingebunden werden kann.

Für manche technische Anwendungsfälle wäre es allerdings wünschenswert, daß das Wirksamwerden der Hilfsfunktion ganz gezielt vom Anwender ausgelöst werden kann.

Aufgabe der Erfindung ist es, ein Verfahren der eingangs genannten Art so auszubilden, daß es in der Hand des Anwenders liegt, wann innerhalb eines Verfahrsatzes eine Hilfsfunktion wirksamgeschaltet wird.

Gemäß der Erfindung wird diese Aufgabe dadurch gelöst, daß jeder Hilfsfunktion jeweils eine weitere Kennung beigeordnet wird, die den Soll-Ort und/oder die Soll-Geschwindigkeit und/ oder die Soll-Zeit der Auslösung der jeweiligen Hilfsfunktion spezifiziert angibt, daß die jeweilige Hilfsfunktion nebst der zugehörigen Kennung jeweils an einen der Sonderfunktion vorangehenden Verfahrsatz angefügt werden, daß ein Umsetzer für die numerische Steuerung die jeweilige Kennung beim Starten dieses Verfahrsatzes aufnimmt, von dann an die relevanten Istwerte auf das Erreichen des jeweiligen der Kennung zugeordneten Sollwertes überwacht und mit diesem Erreichen die zugehörige Hilfsfunktion an die Anpaßsteuerung durchschaltet.

Wenn dazu der Bahnweg das entscheidende Kriterium sein soll, z.B. wenn nach einem vorgegebenen Weg ein Kleberauftrag erfolgen soll, erweist es sich als vorteilhaft, daß die weitere Kennung den Bahnweg angibt, zu dem die jeweilige Hilfsfunktion auslösbar ist. Ebenso ist es allerdings für eine Ortskennzeichnung möglich, daß die weitere Kennung die Achspositionen desjenigen Orts angibt, an dem die jeweilige Funktion auslösbar ist.

Eine weitere Ausbildung der Erfindung ist dadurch gekennzeichnet, daß einem Verfahrsatz mehrere weitere Kennungen für mehrere Hilfsfunktionen einprägbar sind.

Ein Ausführungsbeispiel der Erfindung ist in der Zeichnung dargestellt und wird im folgenden näher erläutert. Dabei zeigen:
FIG 1 ein Bolckschaltbild und
FIG 2 fünf signifikante Verfahrsätze.

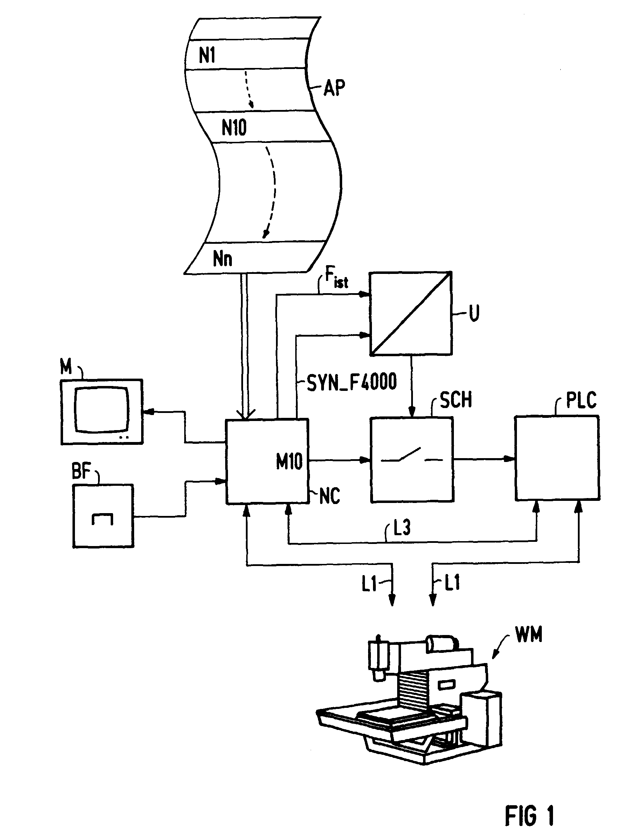

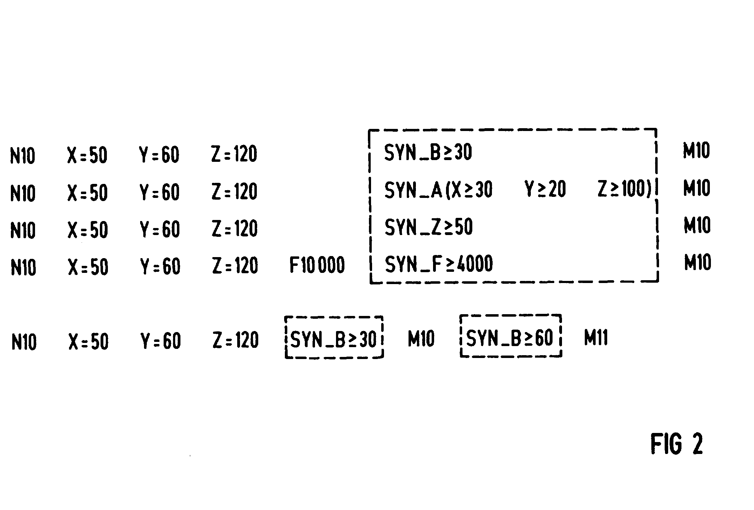

In der Darstellung gemäß FIG 1 ist eine numerische Steuerung NC gezeigt, die über ein Leitungssystem L1 in Wirkverbindung mit einer Werkzeugmaschine WM steht. Ferner ist über Leitungssysteme L2 und L3 eine Anpaßsteuerung PLC in das System eingebunden, die für bestimmte periphere Funktionen Verwendung findet. Die numerische Steuerung NC kann über ein Bedienfeld BF mit Informationen versorgt werden und über einen Monitor M ist eine Anzeige von Daten möglich. Über das Bedienfeld BF oder über der Anschaulichkeit halber nicht dargestellte weitere Eingabemittelt kann ein Anwenderprogramm AP der numerischen Steuerung NC mitgeteilt werden. Im Anwenderprogramm AP mögen beispielsweise Verfahrsätze N1, N10 und Nn einzelne Bewegungsvorgänge auslösen. Für einen Verfahrsatz N10 wird nun in der Darstellung gemäß FIG 2 angegeben, wie gemäß der Erfindung Orte bzw. Zeitpunkte zum Auslösen von seiten der Anpaßsteuerung PLC zu vollziehenden Hilfsfunktionen vorgegeben werden können.

In der obersten Zeile von FIG 2 ist als erstes Beispiel für den Verfahrsatz N10 angegeben, daß ein Werkzeug auf Achspositionen X = 50, Y = 60 und Z = 120 zu verfahren ist. Ferner soll im Verfahrsatz N10 eine Hilfsfunktion M10, beispielsweise "Kleber EIN", veranlaßt werden. Durch das gestrichelt angedeutete Feld ist nun gezeigt, daß dies dem Verfahrsatz durch eine weitere Kennung eingeprägt wird. So wird durch SYN_B größer/gleich 30 angegeben, daß ab einem Verfahrweg von 30 mm die Hilfsfunktion M10 auszulösen ist. Wie dies hardwaremäßig zu erfolgen hat, wird weiter unten im Zusammenhang mit FIG 1 noch geschildert.

In der zweiten Zeile von FIG 2 ist für ein weiteres Beispiel für den obengenannten Verfahrbefehl N10 angenommen, daß die weitere Kennung nicht bahnwegabhängig auszulösen ist, sondern daß ab bestimmten Werten für die Achsen X, Y und Z, nämlich nach X größer/gleich 30, Y größer/gleich 20 und Z größer/gleich 100 die Hilfsfunktion M10 auszulösen ist. Damit dies von Detektionsmitteln erkennbar ist, lautet in diesem Fall die weitere Kennung SYN_A(X größer/gleich 30, Y größer/gleich 20, Z größer/gleich 100). Auch hier wird durch SYN_A gezeigt, daß ein Synchronisiervorgang stattzufinden hat und durch die weitere Zeichenfolge werden sozusagen die Ausgabeparameter bestimmt.

In der dritten Zeile von FIG 2 ist für den Verfahrsatz N10 angenommen, daß eine zeitabhängige Auslösung des Synchroniersiervorgangs für die Hilfsfunktion M10 möglich ist. So ist im Ausführungsbeispiel durch SYN_Z = 50 angegeben, daß nach mehr als 50 ms die Hilfsfunktion M10 auszulösen ist.

In der vierten Zeile von FIG 2 ist für den Verfahrsatz N10, diesmal durch F10000 angegeben, daß eine Geschwindigkeit von 10 m pro Minute als Sollgeschwindigkeit vorgegeben ist. Durch eine weitere Kennung SYN_F = 4000 wird dabei vom Anwender vorgegeben, daß ab Erreichen einer Geschwindigkeit von 4 m pro Sekunde die Hilfsfunktion M10 erfolgen soll.

In der untersten Zeile von FIG 2 ist gezeigt, daß auch eine Verkettung mehrerer weiterer Kennungen mit mehreren Hilfsfunktionen innerhalb eines Verfahrsatzes möglich ist. So ist wiederum für den Verfahrsatz N10 gezeigt, daß beispielsweise durch SY_B größer/gleich 30 die Hilfsfunktion M10 ausgelöst werden soll, und durch das folgende in den Verfahrsatz eingefügte Element SYN_B größer/gleich 60 wird die weitere Hilfsfunktion M11 ausgelöst. Im Ausführungsbeispiel kann hierzu beispielsweise angenommen sein, daß nach größer/gleich 30 mm Bahnweg ein Kleberauftrag eingeschaltet werden soll und nach größer/gleich 60 mm Bahnweg der Kleberauftrag ausgeschaltet werden soll.

Für den in der vierten Zeile von FIG 2 geschilderten Verfahrsatz N10 ist nun in der Darstellung gemäß FIG 1 das Wirken der Einrichtung beschrieben. So stellt die numerische Steuerung NC zunächst fest, daß im Verfahrsatz N10 eine Hilfsfunktion M10 auszulösen ist. Diese Hilfsfunktion M10 wird von der numerischen Steuerung NC, wie im Blockschaltbild angedeutet, ausgangsseitig bereitgehalten. Ferner ist dem Verfahrsatz M10 die weitere Kennung SYN_F 4000 zu eigen, die für einem Umsetzer U angibt, daß die Istgeschwindigkeit der Werkzeugmaschine WM bezüglich der jeweiligen Verfahrbewegung auf das Erreichen eines Wertes von 4 m pro Minute zu überwachen ist. Dazu wird von der numerischen Steuerung NC noch die jeweilige Geschwindigkeit Fᵢₛₜ an den Umsetzer U gemeldet, der eben dann, wenn die Istgeschwindigkeit Fᵢₛₜ mit der für die Hilfsfunktion M10 relevante Geschwindigkeit von 4 m pro Sekunde übereinstimmt, an seinem Ausgang einen Schalter SCH schließenden Befehl abgibt, die Hilfsfunktion M10 von der numerischen Steuerung NC an die Anpaßsteuerung PLC durchgeschaltet wird.

Selbstverständlich ist es bei der Erfindung auch möglich, die Funktionen des Umsetzers U und des Schalters S in die numerische Steuerung NC oder die Anpaßsteuerung PLS einzubringen.

## Patentansprüche

1. Verfahren zur Steuerung einer Werkzeugmaschine (WM) oder eines Roboters unter Verwendung einer numerischen Steuerung (NC) und einer Anpaßsteuerung (PLC), wobei der numerischen Steuerung (NC) in einem jeweiligen Anwenderprogramm (AP) satzweise unter anderem Verfahrsätze (N1 bis Nn) eingegeben werden, die zusätzliche Hilfsfunktionen (M10,M11) zum Auslösen von Sonderfunktionen beinhalten, die beim von der numerischen Steuerung detektierten Erreichen vorgebbarer Istwerte, z.B. Ist-Ort, Ist-Geschwindigkeit oder Ist-Zeit, der durch die Steuerung (NC) bewirkten Bewegung der Werkzeugmaschine (WM) oder des Roboters sodann über die Anpaßsteuerung (PLC) gestartet werden, **dadurch gekennzeichnet,** daß jeder Hilfsfunktion (M10,M11) jeweils eine weitere Kennung (SYNC_...) beigeordnet wird, die den Soll-Ort und/oder die Soll-Geschwindigkeit und/oder die Soll-Zeit der Auslösung der jeweiligen Hilfsfunktion spezifiziert angibt, daß die jeweilige Hilfsfunktion nebst der zugehörigen Kennung jeweils an einen der Sonderfunktion vorangehenden Verfahrsatz angefügt werden, daß ein Umsetzer (U) für die numerische Steuerung (NC) die jeweilige Kennung beim Starten dieses Verfahrsatzes aufnimmt, von dann an die relevanten Istwerte auf das Erreichen des jeweiligen der Kennung zugeordneten Sollwertes überwacht und mit diesem Erreichen die zugehörige Hilfsfunktion (M10, M11) an die Anpaßsteuerung (PLC) durchschaltet.

2. Verfahren nach Anspruch 1, **dadurch gekennzeichnet**, daß die weitere Kennung (SYN-B größer/gleich 30, SYN-B größer/gleich 60) den Bahnweg angibt, zu dem die jeweilige Hilfsfunktion (M10,M11) auslösbar ist.

3. Verfahren nach Anspruch 1 oder 2, **dadurch gekennzeichnet,** daß die weitere Kennung (SYN-A X größer/gleich 30, Y größer/gleich 20, Z größer/gleich 100) die Achswege des Ortes angibt, zu dem die jeweilige Hilfsfunktion (M10) auslösbar ist.

4. Verfahren nach Anspruch 1, 2 oder 3, **dadurch gekennzeichnet**, daß einem Verfahrsatz mehrere weitere Kennungen (SYN-B größer/gleich 30, SYN-B größer/gleich 60) für mehrere Hilfsfunktionen (M10,M11) einprägbar sind.

## Claims

1. Method for controlling a machine tool (WM) or a robot using a numerical control (NC) and an interface control (PLC), wherein among other things, travel blocks (N1 to Nn) are input block by block to the numerical control (NC) in a respective user program (AP), which travel blocks contain additional auxiliary functions (M10, M11) for triggering special functions, which, when predeterminable actual values, e.g. actual location, actual velocity or actual time, of the movement of the machine tool (WM) or of the robot that is effected by the control (NC) are reached, something which is detected by the numerical control, are then started by way of the interface control (PLC), characterised in that there is assigned to each auxiliary function (M10, M11) in each case a further identifier (SYNC_...), which indicates in a specified manner the desired location and/or the desired velocity and/or the desired time of the triggering of the respective auxiliary function, in that the respective auxiliary function together with the associated identifier are added in each case to a travel block which precedes the special function, in that a converter (U) for the numerical control (NC) records the respective identifier when this travel block is started, from then on monitors the relevant actual values for reaching the respective desired value which is allocated to the identifier, and when this desired value is reached switches through the associated auxiliary function (M10, M11) to the interface control (PLC).

2. Method according to claim 1, characterised in that the further identifier (SYN-B greater than/equal to 30, SYN-B greater than/equal to 60) indicates the travel path at which the respective auxiliary function (M10, M11) can be triggered.

3. Method according to claim 1 or 2, characterised in that the further identifier (SYN-A X greater than/equal to 30, Y greater than/equal to 20, Z greater than/equal to 100) indicates the axial paths of the location at which the respective auxiliary function (M10) can be triggered.

4. Method according to claim 1, 2, or 3, characterised in that a plurality of further identifiers (SYN-B greater than/equal to 30, SYN-B greater than/equal to 60) for a plurality of auxiliary functions (M10, M11) can be applied to a travel block.

## Revendications

1. Procédé de commande d'une machine-outil (WM) ou d'un robot; utilisant une commande (NC) numérique et une interface machine (PLC), dans lequel on introduit bloc par bloc dans la commande numérique (NC) dans un programme (AP) d'utilisateur entre autres des blocs (N1 à Nn) de mouvement, qui comprennent des fonctions auxiliaires supplémentaires (M10, M11) pour le déclenchement de fonctions particulières, que l'on déclenche ensuite par l'intermédiaire de l'interface (PLC) machine, lorsque le fait que des valeurs réelles pouvant être prescrites, par exemple un lieu réel, une vitesse réelle ou un temps réel, du mouvement, provoqué par la commande (NC), de la machine-outil (WM) ou du robot, est détecté par la commande numérique, caractérisé en ce que l'on adjoint à chaque fonction auxiliaire (M10, M11) une caractérisation supplémentaire (SYNC_...), qui indique de manière spécifique le lieu de consigne et/ou la vitesse de consigne et/ou le temps de consigne du déclenchement de la fonction particulière considérée, on ajoute la fonction auxiliaire considérée, outre à la caractérisation associée, respectivement à un bloc de mouvement précédant la fonction particulière, un convertisseur (U) pour la commande numérique (NC) reçoit la caractérisation considérée lors du déclenchement de ce bloc de mouvement, à partir duquel les valeurs réelles déterminantes sont contrôlées pour savoir si la valeur de consigne associée à la caractérisation est atteinte et à partir duquel la fonction auxiliaire associée (M10, M11) est communiquée, lorsque la valeur de consigne est atteinte, à l'interface machine (PLC).

2. Procédé suivant la revendication 1, caractérisé en ce que la caractérisation supplémentaire (SYN_B supérieur ou égal à 30, SYN_B supérieur ou égal à 60) indique la course sur la trajectoire, pour laquelle la fonction auxiliaire considérée (M10, M11) peut être déclenchée.

3. Procédé suivant la revendication 1 ou 2, caractérisé en ce que la caractérisation supplémentaire (SYN_A X supérieur ou égal à 30, Y supérieur ou égal à 20, Z supérieur ou égal à 100) indique les courses axiales du lieu, où la fonction auxiliaire considérée (M10) peut être déclenchée.

4. Procédé suivant la revendication 1, 2 ou 3, caractérisé en ce que plusieurs caractérisations supplémentaires (SYN_B supérieur ou égal à 30, SYN_B supérieur ou égal à 60) pour plusieurs fonctions auxiliaires (M10, M11) peuvent être imposées à un bloc de mouvement.
